# DEMANDE DE BREVET EUROPEEN

(11) **EP 1 953 968 A1**
(43) Date de publication de la demande: **06.08.2008**
(21) Numéro de dépôt: 08101049.8
(22) Date de dépôt: 29.01.2008
(51) Int. Cl.: H04L 12/28, H04Q 7/32, H04Q 7/38, H04Q 7/24

(54) **Procede d'établissement de communications a cout reduit pour un utilisateur de terminal mobile situe a proximite d'un terminal connecte a un reseau fixe, et dispositifs de controle d'éetablissement de communication associés**

(30) Priorité: 30.01.2007 FR 0752952
(71) Demandeur: Alcatel Lucent, 75008 Paris (FR)
(72) Inventeur: Abou-chakra, Rabih, 95240, CORMEILLES EN PARISIS (FR); Bernard, Michel, 29830, PLOUDALMEZEAU (FR)
(74) Mandataire: Sciaux, Edmond

(57) **Abrégé**

Un procédé d'établissement d'une communication avec un terminal de communication pour un utilisateur d'un terminal de communication mobile (T1) disposant d'une adresse de communication, dite première adresse, et agencé pour se connecter à un réseau de communication mobile (R1) et à un terminal de communication dit hôte (T2 ; T2'), via un réseau local sans fil (R2), consiste :
a) à connecter ledit terminal de communication mobile (T1) à un réseau local sans fil (R2), de manière à obtenir une adresse de communication, dite seconde adresse, d'un terminal de communication hôte (T2 ; T2') connecté audit réseau local sans fil (R2) et connecté à un réseau de communication fixe (R3), et situé dans le voisinage dudit utilisateur,
b) à transmettre lesdites première et seconde adresses à un équipement de réseau (ER) apte à associer lesdits terminaux mobile (T1) et hôte (T2 ; T2') pour des prochains événements de communication,
c) en cas de demande d'établissement d'une communication, issue d'un terminal tiers de communication (T3) et désignant ladite première adresse, transformer, dans ledit équipement de réseau (ER), cette demande en une demande d'établissement de communication vers au moins ladite seconde adresse,
d) établir une communication entre le terminal tiers de communication (T3) et le terminal hôte (T2 ; T2').

## Description

L'invention concerne les réseaux de communication, et plus précisément l'établissement de communications dans de tels réseaux à l'initiative d'utilisateurs de terminaux de communication mobiles (ou cellulaires ou encore portables) ou pour joindre de tels utilisateurs.

On entend ici par « terminal de communication mobile » tout type d'équipement de communication mobile ou portable ou encore cellulaire capable de communiquer de façon bidirectionnelle avec un autre équipement de communication par voie d'ondes :
1) via un réseau global de communication mobile (ou cellulaire), par exemple de type GSM ou dérivé, et
2) via un réseau local sans fil (par exemple de type WLAN, WiFi, Bluetooth, ou infrarouge).

Il pourra par exemple s'agir d'un téléphone mobile (ou cellulaire), d'un assistant personnel numérique (ou PDA), d'un ordinateur portable, ou de tout autre équipement informatique portable pouvant accueillir un équipement de communication de type « softphone ».

De nombreux utilisateurs de terminaux (de communication) mobiles se servent de leur terminal mobile pour établir une communication avec un autre terminal de communication (fixe ou mobile), alors même qu'ils pourraient utiliser à moindre coût un terminal de communication connecté à un réseau fixe, ce terminal étant un terminal filaire ou un terminal sans fil (par exemple un terminal de type DECT).

Cela peut par exemple résulter d'une inattention, notamment lorsque l'utilisateur est situé à proximité d'un terminal de communication fixe qui appartient à l'entreprise pour laquelle il travaille. Mais cela peut provenir aussi du fait que l'utilisateur est situé à proximité d'un terminal de communication fixe qui n'appartient pas à l'entreprise pour laquelle il travaille, et donc que son utilisation serait à la charge de cette entreprise.

Le cumul des coûts de ces communications effectuées au moyen de terminaux mobiles peut s'avérer particulièrement important pour une entreprise. De plus, il est difficile aux opérateurs et gestionnaires de réseau de communication de gérer et de contrôler ces communications, voire même de les refacturer, lorsqu'elles résultent de terminaux mobiles qui se sont connectés à des réseaux d'accès visités (ou « visited access network »), c'est-à-dire différents de leurs réseaux d'accès de rattachement (ou « home access network»). Cette dernière situation est connue sous le nom d'itinérance ou, en anglais, de « roaming ».

Afin d'améliorer la situation, plusieurs services de rappel (ou « call back ») ont été proposés.

L'un de ces services consiste, lorsqu'un terminal mobile en situation de « roaming » souhaite établir une communication avec un autre terminal, à appeler un centre de commutation de réseau, par exemple de type P(A)BX (pour « Private (Automatic) Branch eXchange »), au moyen de ce terminal mobile, puis à raccrocher et à attendre que le centre de commutation de réseau rappelle le terminal mobile et se charge d'appeler l'autre terminal pour établir la communication demandée. L'inconvénient principal de ce service réside dans son coût. Il nécessite en effet trois appels, dont deux au moins concernent un terminal mobile en situation de « roaming ». En outre, ce service doit être utilisé chaque fois qu'une communication doit être établie.

Un autre de ces services repose sur l'utilisation d'un intermédiaire de type « soft phone » (ou équivalent) qui peut être implanté soit dans le terminal mobile qui est en situation de « roaming » et qui souhaite établir une communication avec un autre terminal, soit dans un terminal de communication voisin du terminal mobile, comme par exemple un ordinateur connecté à un réseau. Une fois cet intermédiaire contacté par le terminal mobile, l'utilisateur du terminal mobile doit alors lui fournir le numéro de téléphone d'un terminal de communication fixe, voisin. Puis, l'intermédiaire doit appeler un centre de commutation de réseau, par exemple de type P(A)BX, en mode de transfert de données (ou « data »), afin de lui communiquer le numéro de téléphone du terminal de communication fixe, et de lui demander d'établir une communication entre ce terminal de communication fixe et l'autre terminal. L'inconvénient principal de ce service réside dans le fait qu'il nécessite de l'utilisateur du terminal mobile l'obtention du numéro de téléphone d'un terminal de communication fixe voisin et plusieurs manipulations sur son terminal mobile.

Aucune solution connue n'apportant une entière satisfaction, l'invention a donc pour but d'améliorer la situation.

Un premier objet de l'invention est un procédé d'établissement d'une communication avec un terminal de communication pour un utilisateur d'un terminal de communication mobile disposant d'une adresse de communication, dite première adresse, et agencé pour se connecter à un réseau de communication mobile et à un terminal de communication dit hôte, via un réseau local sans fil ;
caractérisé en ce qu'il consiste :
a) à connecter ledit terminal de communication mobile à un réseau local sans fil, de manière à obtenir une adresse de communication, dite seconde adresse, d'un terminal de communication hôte connecté audit réseau local sans fil et connecté à un réseau de communication fixe, et situé dans le voisinage dudit utilisateur,
b) à transmettre lesdites première et seconde adresses à un équipement de réseau apte à associer lesdits terminaux mobile et hôte pour des prochains événements de communication,
c) en cas de demande d'établissement d'une communication, issue d'un terminal tiers de communication et désignant ladite première adresse, transformer, dans ledit équipement de réseau, cette demande en une demande d'établissement de communication vers au moins ladite seconde adresse,
d) établir une communication entre le terminal tiers de communication et le terminal hôte.

Le procédé selon l'invention peut comporter d'autres caractéristiques qui peuvent être prises séparément ou en combinaison, et notamment :
- En cas de demande d'établissement de communication déclenchée par l'utilisateur au moyen de son terminal mobile, on peut établir la communication via le réseau local sans fil, le terminal fixe, le réseau fixe et l'équipement de réseau. En variante, lors de chaque nouvelle demande d'établissement de communication déclenchée par l'utilisateur au moyen de son terminal mobile, ce dernier peut proposer à l'utilisateur d'établir la communication au moyen du terminal fixe.
- A l'étape b le terminal mobile peut transmettre les première et seconde adresses à l'équipement de réseau afin qu'il les associe. En variante, à cette étape b le terminal fixe peut transmettre sa seconde adresse et la première adresse à l'équipement de réseau afin qu'il les associe.
- La transmission d'adresses peut par exemple se faire au moyen d'un message court (par exemple de type SMS), ou en mode connecté ou non connecté, ou encore en mode de transfert de données (« data »).
- A l'étape a on peut connecter automatiquement le terminal mobile à un réseau local sans fil de type personnel (ou PAN (pour « Personal Area Network »)) dès que l'on détecte sa présence dans la zone de couverture du réseau local personnel sans fil, de sorte qu'il puisse s'approprier le terminal fixe associé (notion de « login »). En variante, à l'étape a, dès que l'on détecte la présence du terminal mobile dans la zone de couverture d'un réseau local sans fil de type personnel, on peut proposer à son utilisateur de se connecter à ce réseau local personnel sans fil, et, en cas de réception d'une autorisation, on ordonne au terminal mobile de se connecter au réseau local personnel sans fil, de sorte qu'il puisse s'approprier le terminal fixe associé (notion de « login »).
- La détection peut être effectuée par le terminal fixe ou par le terminal mobile.
- En présence d'un terminal fixe capable de joindre le terminal mobile via le réseau local sans fil, et en cas de demande d'établissement de communication issue d'un terminal tiers de communication et désignant la première adresse, l'équipement de réseau peut transférer cette demande au moins vers la seconde adresse en requérant son transfert vers le terminal mobile, en vue de l'établissement de la communication demandée entre le terminal mobile et le terminal tiers de communication via le réseau local sans fil, le terminal fixe, le réseau fixe et lui-même.
- En cas de demande d'établissement de communication, issue d'un terminal tiers de communication et désignant la première adresse, l'équipement de réseau peut éventuellement transférer cette demande à la fois vers les première et seconde adresses.
- On peut informer l'équipement de réseau du fait que le terminal mobile ne se trouve plus situé dans la zone de couverture du réseau local sans fil, afin qu'il cesse de transférer les demandes d'établissement de communication vers la seconde adresse.
- L'équipement de réseau peut être informé par le terminal mobile ou par le terminal fixe.

Un second objet de l'invention est un premier dispositif de contrôle d'établissement de communication pour un terminal de communication mobile disposant d'une adresse de communication, dite première adresse, et agencé pour se connecter à un réseau de communication mobile et à un réseau local sans fil, caractérisé en ce qu'il comprend des moyens de traitement agencés pour, lorsque ledit terminal de communication mobile est situé dans la zone de couverture d'un réseau local sans fil, ordonner audit terminal de communication mobile de :
i) se connecter à ce réseau local sans fil, de manière à obtenir une adresse de communication, dite seconde adresse, qui est l'adresse d'un terminal de communication dit hôte connecté audit réseau local sans fil et connecté à un réseau de communication fixe, ce terminal de communication hôte étant situé dans le voisinage dudit terminal de communication mobile,
ii) transmettre lesdites première et seconde adresses à un équipement de réseau, via ledit réseau de communication mobile, cet équipement de réseau étant apte à associer lesdits terminaux mobile et hôte pour des prochains événements de communication.

Ce dispositif selon l'invention peut comporter d'autres caractéristiques qui peuvent être prises séparément ou en combinaison, et notamment :
- En cas de demande d'établissement de communication déclenchée par l'utilisateur au moyen de son terminal mobile, ses moyens de traitement peuvent être chargés d'organiser l'établissement de la communication via le réseau local sans fil, le terminal fixe, le réseau fixe et l'équipement de réseau. En variante, lors de chaque nouvelle demande d'établissement de communication déclenchée par l'utilisateur au moyen de son terminal mobile, ses moyens de traitement peuvent être chargés de proposer à l'utilisateur d'établir la communication au moyen du terminal de communication fixe.
- Ses moyens de traitement peuvent être chargés d'ordonner au terminal mobile de transmettre les première et seconde adresses à l'équipement de réseau au moyen d'un message court (par exemple de type SMS), ou en mode connecté ou non connecté, ou encore en mode de transfert de données (« data »), afin qu'il les associe.
- Il peut comprendre des moyens de détection de présence chargés de détecter la présence du terminal mobile dans la zone de couverture d'un réseau local sans fil de type personnel (PAN). Dans ce cas, ses moyens de traitement peuvent être chargés, en cas de détection du terminal mobile dans la zone de couverture d'un réseau local personnel sans fil, d'ordonner automatiquement au terminal mobile de se connecter à ce réseau local personnel sans fil de sorte qu'il puisse s'approprier le terminal fixe associé (notion de « login »). En variante, ses moyens de traitement peuvent être chargés, en cas de détection du terminal mobile dans la zone de couverture d'un réseau local personnel sans fil, de proposer à son utilisateur de se connecter à ce réseau local personnel sans fil, et, en cas de réception d'une autorisation, d'ordonner au terminal mobile de se connecter au réseau local personnel sans fil, de sorte qu'il puisse s'approprier le terminal fixe associé (notion de « login »).
- Lors de la détection de la sortie du terminal mobile hors de la zone de couverture du réseau local sans fil, ses moyens de traitement peuvent être chargés d'ordonner au terminal mobile d'en informer l'équipement de réseau afin qu'il cesse de transférer les demandes d'établissement de communication vers la seconde adresse de communication.

Un troisième objet de l'invention est un terminal (de communication) mobile, capable de se connecter à un réseau mobile et à un réseau local sans fil et équipé d'un premier dispositif du type de celui présenté ci-avant.

Un quatrième objet de l'invention est un second dispositif dédié au contrôle de l'établissement de communication pour un terminal hôte disposant d'une adresse de communication, dite seconde adresse, et constituant un point d'accès à un réseau local sans fil, ce terminal hôte étant connecté à un réseau de communication fixe ;
caractérisé en ce qu'il comprend des moyens de traitement agencés pour, en présence d'un terminal de communication mobile dans la zone de couverture dudit réseau local sans fil, ce terminal de communication mobile disposant d'une adresse de communication, dite première adresse, et étant agencé pour se connecter à un réseau de communication mobile et à un réseau local sans fil,
i) demander audit terminal de communication mobile de se connecter à ce réseau local sans fil, de manière à obtenir ladite première adresse et une autorisation de l'utilisateur dudit terminal de communication mobile,
ii) transmettre lesdites première et seconde adresses à un équipement de réseau, via ledit réseau de communication fixe, et lui demander d'associer lesdits terminaux mobile et hôte pour des prochains événements de communication.

Ce second dispositif de contrôle peut comporter d'autres caractéristiques qui peuvent être prises séparément ou en combinaison, et notamment :
- En cas de réception d'une demande d'établissement de communication en provenance du terminal mobile, ses moyens de traitement peuvent être chargés d'organiser l'établissement de la communication via le réseau local sans fil, le terminal fixe, le réseau fixe et l'équipement de réseau. En variante, en cas de réception d'une demande d'établissement de communication en provenance du terminal mobile, ses moyens de traitement peuvent être chargés d'ordonner au terminal fixe de transmettre au terminal mobile un message lui proposant d'établir cette communication à partir du terminal fixe.
- Ses moyens de traitement peuvent être chargés d'ordonner au terminal fixe de transmettre les première et seconde adresses à l'équipement de réseau au moyen d'un message court (par exemple de type SMS) ou en mode connecté ou non connecté, ou encore en mode de transfert de données, afin qu'il les associe.
- Il peut comprendre des moyens de détection de présence chargés de détecter la présence du terminal mobile dans la zone de couverture d'un réseau local sans fil de type personnel (Personal Area Network). Dans ce cas, ses moyens de traitement peuvent être chargés, en cas de détection du terminal mobile dans la zone de couverture d'un réseau local personnel sans fil, d'ordonner automatiquement au terminal fixe de transmettre au terminal mobile un message lui proposant de se connecter au réseau local personnel sans fil pour lui communiquer sa première adresse de communication et de sorte qu'il puisse s'approprier le terminal fixe associé (notion de « login »).
- En l'absence de détection du terminal mobile dans la zone de couverture du réseau local sans fil, ses moyens de traitement peuvent être chargés d'ordonner au terminal fixe d'en informer l'équipement de réseau afin qu'il cesse de transférer les demandes d'établissement de communication vers la seconde adresse.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple d'installation de communication permettant de mettre en oeuvre l'invention et comprenant un terminal mobile équipé d'un exemple de réalisation d'un premier dispositif de contrôle selon l'invention, et
- la figure 2 illustre de façon très schématique et fonctionnelle un exemple d'installation de communication permettant de mettre en oeuvre l'invention et comprenant un terminal fixe équipé d'un exemple de réalisation d'un second dispositif de contrôle selon l'invention.

Les dessins annexés pourront non seulement servir à compléter l'invention, mais aussi contribuer à sa définition, le cas échéant.

L'invention a pour objet de permettre à l'utilisateur d'un terminal mobile capable de se connecter à un réseau mobile global et à un réseau local sans fil, notamment lorsqu'il est en situation de « roaming », d'être joint par, et/ou de joindre, des terminaux de communication via un terminal connecté à un réseau fixe et à un réseau local sans fil, en limitant, voire même supprimant, les interventions de cet utilisateur et pour un coût réduit.

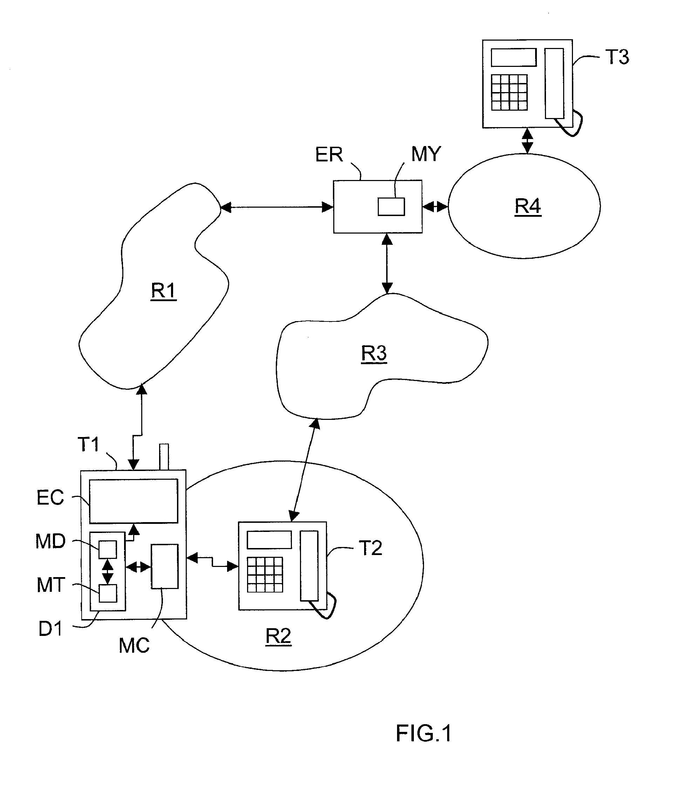

L'exemple représenté de façon schématique et fonctionnelle sur la figure 1 comporte :
- au moins un réseau (de communication) mobile global R1, par exemple de type GSM,
- un réseau local sans fil R2,
- un réseau (de communication) fixe R3,
- un équipement de réseau ER, connecté au réseau mobile R1 et au réseau fixe R3,
- un terminal (de communication) mobile T1, comportant un module de communication MC pouvant se connecter au réseau mobile R1 et au réseau local sans fil R2,
- un terminal (de communication) dit hôte, T2, pouvant se connecter au réseau fixe R3, et au réseau local sans fil R2 ou bien constituant un point d'accès radio à ce dernier,
- et des terminaux de communication tiers T3, fixes ou mobiles.

Dans ce qui suit, on considère, à titre d'exemple illustratif et non limitatif, que le terminal mobile T1 est un téléphone mobile (ou cellulaire), adapté aux communications avec un réseau global sans fil, par exemple de type GSM ou GPRS/EDGE ou encore UMTS ; et également adapté aux communications avec un réseau local sans fil de type Bluetooth.

Mais, l'invention n'est pas limitée à ce type de terminal mobile. Elle concerne en effet tout type d'équipement de communication mobile ou portable ou encore cellulaire capable de communiquer de façon bidirectionnelle avec un autre équipement de communication, par voie d'ondes, via un réseau de communication mobile (ou cellulaire) global, et via un réseau local sans fil (par exemple de type WLAN, WiFi, Bluetooth ou infrarouge). Il pourra donc également s'agir, par exemple, d'un assistant personnel numérique (ou PDA), ou d'un ordinateur portable, ou de tout autre équipement informatique portable pouvant accueillir un équipement de communication de type « softphone ».

Par ailleurs, on considère dans ce qui suit, à titre d'exemple illustratif et non limitatif, que le terminal hôte T2 est un téléphone fixe numérique, éventuellement de type voix sur IP (ou VoIP). Il est relié par fil au réseau R3 , et il constitue un point d'accès radio du réseau local personnel sans fil (ou PAN (pour « Personal Area Network »)) R2. Ce terminal hôte T2 est par exemple implanté dans une salle de réunion ou un bureau.

Mais, l'invention n'est pas limitée à ce type de terminal fixe numérique. Elle concerne en effet tout type d'équipement de communication capable de communiquer de façon bidirectionnelle et numérique avec un autre équipement de communication, d'une part, par voie d'ondes via un réseau local sans fil (par exemple de type WLAN, WiFi, Bluetooth ou infrarouge), et d'autre part via un réseau de communication fixe (par exemple de type Ethernet, xDSL, ou fibre optique, pour réaliser des réseaux de type LAN, MAN ou WAN). Il pourra donc également s'agir d'un ordinateur fixe, par exemple.

Il pourra s'agir aussi d'un terminal téléphonique de type DECT, relié par radio au réseau fixe R3, et comportant un module d'émission-réception Bluetooth constituant un point d'accès radio pour le réseau mobile R2. On notera que lorsque le terminal fixe ne dispose pas d'une capacité de communication de type PAN, il ne constitue pas forcément un point d'accès au réseau local sans fil et peut être simplement connecté à ce dernier. Dans ce cas, le réseau local sans fil doit comprendre au moins un point d'accès définissant une zone de couverture.

Enfin, on considère dans ce qui suit, à titre d'exemple illustratif et non limitatif, que l'équipement de réseau ER est un centre de commutation de réseau, par exemple de type P(A)BX (pour « Private (Automatic) Branch exchange »), et qu'il fait partie d'un réseau local privé R4 d'une entreprise dont fait partie l'utilisateur du terminal mobile T1. Mais, l'invention n'est pas limitée à ce type d'équipement de réseau. Elle concerne en effet tout type d'équipement de communication fixe capable de gérer et contrôler l'établissement de communications pour et avec des terminaux de communication connus, via des réseaux de communication fixes et mobiles.

Le terminal mobile T1, dispose d'une adresse de communication, dite première adresse, utilisable pour établir une communication avec un terminal tiers T3.

Le procédé selon l'invention est mis en oeuvre chaque fois que le terminal mobile T1 parvient dans la zone de couverture du réseau local sans fil R2 auquel son module de communication MC est capable de se connecter.

Un exemple de mise en oeuvre de ce procédé comprend deux principales étapes :
a) La première étape consiste à connecter le terminal mobile T1 au réseau local sans fil R2 afin d'obtenir l'adresse de communication, dite seconde adresse, du terminal hôte T2 connecté à ce réseau local sans fil R2 et à un réseau fixe R3, ce terminal hôte T2 étant situé dans le voisinage du terminal mobile T1. Dans l'exemple illustré par la figure 1, la connexion du terminal mobile T1 au réseau local sans fil R2 se fait via le terminal hôte T2, puisque ce dernier constitue le point d'accès à ce réseau local sans fil R2 (de type PAN). Par conséquent, l'obtention de la seconde adresse (de communication) se fait dans le terminal hôte T2. Mais, on pourrait envisager que l'utilisateur du terminal mobile T1 se trouve dans une pièce équipée d'un point d'accès à un réseau local sans fil et équipée d'un terminal fixe connecté à ce dernier mais ne constituant pas un point d'accès. Dans ce cas, le fait de se connecter à un point d'accès donné permet de déterminer le terminal fixe qui est le plus proche de lui et donc sa seconde adresse (grâce à une table de correspondance, par exemple).
b) La seconde étape consiste à transmettre les première et seconde adresses à un équipement de réseau ER choisi, pour qu'il les associe en vue de prochains événements de communication. Il les stocke en correspondance l'une de l'autre dans une mémoire MY. Ainsi, lorsque l'équipement de réseau ER recevra une demande d'établissement de communication issue d'un terminal tiers T3 (éventuellement connecté à son réseau d'entreprise R4) et désignant la première adresse (du terminal mobile T1), il transfèrera (ou routera) cette demande d'établissement de communication vers la seconde adresse (du terminal hôte T2), via le réseau fixe R3, en vue de l'établissement d'une communication avec le terminal tiers de communication T3 via le réseau fixe R3 et lui-même ; ou bien l'établissement de deux communications à la fois, vers les première et seconde adresses, afin que le terminal hôte T2 et le terminal mobile T1 sonnent (mode « tandem »). Dans ce mode tandem, l'utilisateur est libre de choisir le terminal avec lequel il va répondre. Ainsi l'équipement de réseau ER transforme une demande d'établissement de communication entre les terminaux T3 et T1, en une demande d'établissement de communication entre les terminaux T3 et T2.

Lors de la première étape, la connexion du terminal mobile T1 au réseau local sans fil R2 peut se faire d'au moins deux façons :
-- Une première façon consiste à connecter automatiquement le terminal mobile T1 au réseau local sans fil R2 dès que l'on détecte sa présence dans la zone de couverture du réseau local sans fil, afin qu'il puisse s'approprier le terminal hôte T2 associé (notion de « login »). Une seconde façon consiste, dès que l'on détecte la présence du terminal mobile T1 dans la zone de couverture du réseau local sans fil R2, à proposer à son utilisateur de se connecter à ce dernier au moyen de son terminal mobile T1. Puis, en cas de réception d'une autorisation de l'utilisateur fournie au moyen de l'interface homme/machine de son terminal mobile T1, on ordonne audit terminal mobile T1 de se connecter au réseau local sans fil R2, afin que l'utilisateur du terminal T1 puisse s'approprier le terminal hôte T2 associé (notion de « login »).

Dans l'une ou l'autre de ces deux façons, la détection de présence dans la zone de couverture du réseau radio local R2 peut se faire soit par le terminal mobile T1, soit par le terminal hôte T2. Par exemple, et comme illustré sur la figure 1, le terminal mobile T1 peut être équipé d'un premier dispositif de contrôle d'établissement de communication D1 (ci-après appelé premier dispositif) comprenant un module de traitement MT chargé de mettre en oeuvre une partie au moins des première et seconde étapes du procédé. Plus précisément, le module de traitement MT est chargé, lorsque le terminal mobile est situé dans la zone de couverture du réseau local sans fil R2, d'ordonner au terminal mobile T1 de se connecter à ce réseau local sans fil R2 afin d'obtenir la seconde adresse d'un terminal hôte voisin, T2 en l'occurrence, puis de transmettre les première et seconde adresses à l'équipement de réseau ER, via le réseau mobile R1.

Comme illustré sur la figure 1, le premier dispositif D1 peut également comporter un module de détection de présence MD couplé au module de traitement MT et au module de communication MC du terminal mobile T1, et chargé d'observer ce module de communication MC afin de détecter la présence dudit terminal mobile T1 dans la zone de couverture d'un réseau local sans fil R2. Il est rappelé qu'un point d'accès à un réseau local sans fil peut émettre régulièrement des signaux par voie d'ondes destinées à signaler sa présence à des terminaux mobiles situés à l'intérieur de sa zone de couverture.

Dans ce cas, le module de traitement MT est par exemple chargé, lorsque le module de détection de présence MD l'informe qu'il a détecté que le terminal mobile T1 est présent dans la zone de couverture d'un réseau local sans fil R2, d'ordonner automatiquement audit terminal mobile T1 de se connecter à ce réseau local sans fil R2 afin d'obtenir une seconde adresse d'un terminal hôte, T2.

En variante, le module de traitement MT est par exemple chargé, lorsque le module de détection de présence MD l'informe qu'il a détecté que le terminal mobile T1 est présent dans la zone de couverture d'un réseau local sans fil R2, de proposer à l'utilisateur de se connecter à ce réseau local sans fil R2. Cette proposition peut se faire par tout moyen connu de l'homme de l'art, et par exemple par affichage d'un message d'avertissement sur l'écran EC du terminal mobile T1 et/ou par diffusion d'un message musical ou vocal d'avertissement dédié au moyen du haut-parleur du terminal mobile T1. Puis, si l'utilisateur transmet une autorisation de connexion au module de traitement MT, par exemple au moyen de l'interface homme/machine de son terminal mobile T1, le module de traitement MT ordonne audit terminal mobile T1 de se connecter au réseau local sans fil R2 afin d'obtenir une seconde adresse d'un terminal hôte, T2. Si le module de traitement MT ne reçoit pas d'autorisation, la connexion n'est pas effectuée et le procédé prend fin.

On notera que la connexion peut éventuellement nécessiter que le terminal mobile T1 fournisse au réseau local sans fil R2 (ici au terminal hôte T2) un identifiant ou un mot de passe (« password ») dans le cadre d'une procédure dite de « login » classique. Dans ce cas, l'utilisateur peut être invité à fournir son mot de passe (ou autre) par tout moyen connu de l'homme de l'art, et par exemple par affichage d'un message (éventuellement de type « popup ») sur l'écran EC du terminal mobile T1 et/ou par diffusion d'un message musical ou vocal dédié au moyen du haut parleur du terminal mobile T1.

Le module de traitement MT récupère ainsi la seconde adresse du terminal hôte T2, puis il ordonne à son terminal mobile T1 de la transmettre à l'équipement de réseau ER avec sa propre première adresse.

Cette transmission peut se faire par tout moyen connu de l'homme de l'art. Ainsi, elle peut se faire au moyen d'un message court, par exemple de type SMS, ou en mode connecté ou non connecté, ou encore en mode dit de transfert de données (ou « data »), notamment si le terminal mobile est de type GPRS, UMTS ou analogue.

Il est important de noter que l'entête du message qui est transmis à l'équipement de réseau ER par le terminal mobile T1 comprend généralement la première adresse (source), si bien qu'il suffit d'y adjoindre la seconde adresse.

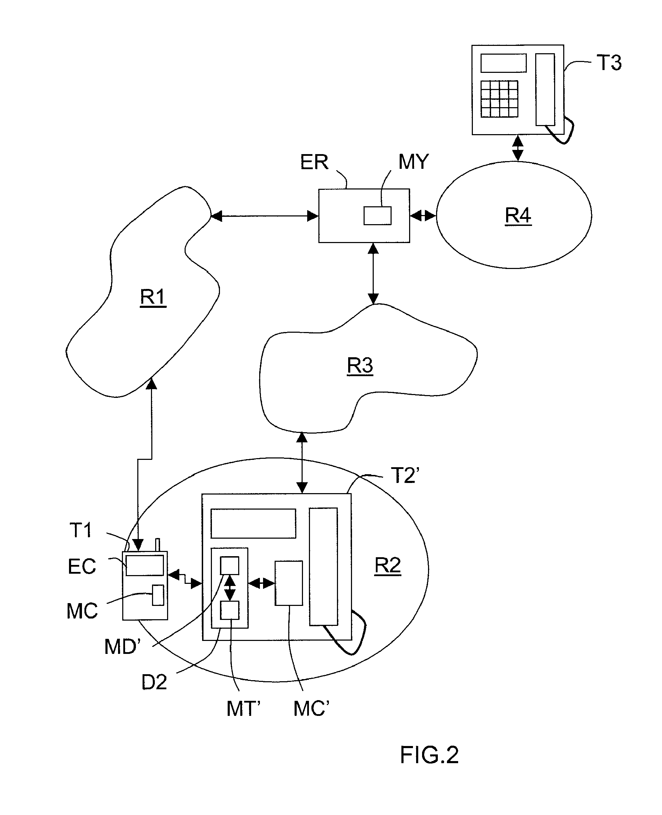

Comme illustré dans l'exemple de la figure 2, au lieu d'équiper le terminal mobile T1 d'un premier dispositif D1, on peut équiper le terminal hôte T2' d'un second dispositif de contrôle d'établissement de communication D2 (ci-après appelé second dispositif) comprenant un module de traitement MT' chargé de mettre en oeuvre une partie au moins des première et seconde étapes du procédé. Plus précisément, le module de traitement MT' est chargé, lorsqu'un terminal mobile T1 est situé dans la zone de couverture du réseau local sans fil R2, d'ordonner à son terminal hôte T2' d'adresser par voie d'ondes à ce terminal mobile T1 un message lui demandant de se connecter au réseau local sans fil R2, afin qu'il lui fournisse sa première adresse, puis d'ordonner à son terminal hôte T2' de transmettre les première et seconde adresses à l'équipement de réseau ER, via le réseau fixe R3, pour qu'il les associe en vue de prochains événements de communication.

Comme illustré sur la figure 2, le second dispositif D2 peut également comporter un module de détection de présence MD' couplé au module de traitement MT' et au module de communication MC' de son terminal hôte T2, et chargé d'observer ce module de communication MC' afin de détecter la présence du terminal mobile T1 dans la zone de couverture du réseau local sans fil R2. Il est rappelé qu'un terminal mobile T1 concerné par l'invention est capable de répondre aux signaux qui peuvent être émis régulièrement par voie d'ondes par le point d'accès à un réseau local sans fil, dans la zone de couverture duquel il est situé, afin de signaler sa présence.

Dans ce cas, le module de traitement MT' est par exemple chargé, lorsque le module de détection de présence MD' l'informe qu'il a détecté un terminal mobile T1 dans la zone de couverture du réseau local sans fil R2, d'ordonner automatiquement au terminal hôte T2 de transmettre à ce terminal mobile T1 un message lui proposant de se connecter au réseau local sans fil R2 afin de lui communiquer son adresse.

Comme dans l'exemple de la figure 1, la connexion peut éventuellement nécessiter que le terminal mobile T1 fournisse au réseau local sans fil R2 (ici au terminal hôte T2) un identifiant ou un mot de passe (« password ») dans le cadre d'une procédure dite de « login » classique.

Le module de traitement MT' récupère ainsi la première adresse du terminal mobile T1, puis il ordonne à son terminal hôte T2 de le transmettre à l'équipement de réseau ER avec sa propre adresse.

De nouveau, cette transmission peut se faire par tout moyen connu de l'homme de l'art. Ainsi, elle peut se faire au moyen d'un message court, ou en mode connecté ou non connecté, ou bien en mode dit de transfert de données (ou « data »).

Il est important de noter que l'entête du message qui est transmis à l'équipement de réseau ER par le terminal hôte T2 comprend généralement la seconde adresse (en tant qu'adresse de source), si bien qu'il suffit d'y adjoindre la première adresse.

Si le terminal hôte T2' est capable de joindre le terminal mobile T1 via le réseau local sans fil R2, alors, lorsqu'une demande d'établissement de communication, issue d'un terminal tiers de communication T3 et désignant la première adresse dudit terminal mobile T1, parvient au niveau de l'équipement de réseau ER, ce dernier peut transférer (ou router aussi) la demande d'établissement de communication vers la seconde adresse (terminal hôte **T2'**) en demandant de la transférer vers le terminal mobile T1. Ainsi, la communication demandée par le terminal tiers de communication T3 peut être établie entre ce dernier et le terminal mobile T1 via le réseau local sans fil R2, le terminal fixe T1, le réseau fixe R3 et l'équipement de réseau ER. En d'autres termes, l'utilisateur du terminal mobile T1 peut être joint sur ledit terminal mobile T1 via le terminal hôte T2' (qu'il s'est approprié (notion de « login »)).

On peut également envisager que l'équipement de réseau ER transfère (ou route aussi) la demande d'établissement de communication à la fois vers les première et seconde adresses afin que le terminal hôte T2' et le terminal mobile T1 sonnent (mode tandem). L'utilisateur est alors libre de choisir le terminal avec lequel il va répondre.

Cette fonction d'intermédiaire de communication nécessite que le terminal hôte T2' soit équipé d'une partie au moins d'un second dispositif D2. C'est en effet le module de traitement MT' de ce dernier qui se charge d'organiser l'établissement de la communication via le réseau local sans fil R2.

Si le terminal hôte T2' n'est pas capable de joindre le terminal mobile T1 via le réseau local sans fil R2, alors la communication est établie entre le terminal tiers (demandeur) T3 et le terminal hôte T2', via le réseau fixe R3. L'utilisateur du terminal mobile T1 étant situé à proximité du terminal hôte T2' (qu'il s'est approprié), il lui suffit alors de décrocher le combiné du terminal hôte T2', lorsqu'il sonne, pour entrer en communication avec l'utilisateur du terminal tiers de communication T3.

On peut également envisager que l'utilisateur du terminal mobile T1 veuille établir une communication entre ce dernier et un autre terminal tiers de communication T3, via le terminal hôte T2' (qu'il s'est approprié). Cette fonction nécessite que le terminal mobile T1 soit équipé d'un premier dispositif D1. C'est en effet le module de traitement MT de ce dernier qui se charge d'organiser l'établissement de la communication via le réseau local sans fil R2.

Dans ce cas, lorsque le module de traitement MT s'aperçoit que l'utilisateur du terminal mobile T1 a déclenché une demande d'établissement de communication, il organise l'établissement de la communication. Pour ce faire, il ordonne à son terminal mobile T1 de transmettre au terminal hôte T2' la demande d'établissement de communication afin qu'il la transfère vers l'équipement de réseau ER via le réseau fixe R3. La communication peut alors être établie entre le terminal mobile T1 et le terminal tiers de communication T3, via le réseau local sans fil R2, le terminal hôte T2', le réseau fixe R3 et l'équipement de réseau ER.

Si le terminal hôte T2' ne peut pas servir d'intermédiaire de communication au terminal mobile T1, ou si l'utilisateur a configuré le premier dispositif D1 pour signaler qu'il préfère effectuer ses appels sur le terminal hôte T2', alors, lorsque l'utilisateur déclenche une demande d'établissement de communication avec son terminal mobile T1, on peut envisager que le module de traitement MT de son premier dispositif D1 soit agencé de manière à lui proposer de se servir directement du terminal hôte T2' pour établir sa communication. Cette proposition peut se faire par tout moyen connu de l'homme de l'art, et par exemple par affichage d'un message d'avertissement sur l'écran EC du terminal mobile T1 et/ou par diffusion d'un message musical ou vocal d'avertissement dédié au moyen du haut-parleur du terminal mobile T1.

En variante, le terminal hôte T2' peut recevoir du terminal mobile T1 une demande d'établissement de communication, alors que son second dispositif D2 n'est pas agencé pour contrôler la fonction d'intermédiaire de communication. Dans ce cas, le module de traitement MT' du second dispositif D2 peut ordonner au terminal hôte T2' de transmettre au terminal mobile T1 un message proposant à son utilisateur d'établir sa communication à partir du terminal hôte T2'. A réception du message, le terminal mobile T1 transmet la proposition à l'utilisateur par tout moyen connu de l'homme de l'art, et par exemple en affichant un message d'avertissement sur son écran EC et/ou en diffusant un message musical ou vocal d'avertissement dédié au moyen de son haut-parleur.

Dans l'un ou l'autre cas, l'utilisateur du terminal mobile T1 doit alors décrocher le combiné du terminal hôte T2' voisin et composer l'adresse de communication (par exemple un numéro de téléphone) du terminal tiers de communication T3 qu'il souhaite joindre.

Lorsque le terminal mobile T1 ne se trouve plus situé dans la zone de couverture du réseau local sans fil R2, on peut en informer l'équipement de réseau ER. Ce dernier supprime alors de sa mémoire MY l'association entre les première et seconde adresses, et donc cesse de transférer les demandes d'établissement de communication vers la seconde adresse (terminal hôte T2'). Toute nouvelle demande d'établissement de communication sera alors routée vers la première adresse (via le réseau mobile R1) et non plus vers la seconde adresse (via le réseau fixe R2).

L'équipement de réseau ER peut être informé soit par le terminal mobile T1 s'il dispose d'un premier dispositif D1, soit par le terminal hôte T2' s'il dispose d'un second dispositif D2.

En effet, si le terminal mobile T1 dispose d'un premier dispositif D1 muni d'un module de détection de présence MD, ce dernier sait, du fait qu'il observe le module de communication MC, quand son terminal mobile T1 n'est plus dans la zone de couverture d'un réseau local sans fil R2 (fin de réception des signaux émis par le point d'accès (ici T2')). Il peut alors en informer le module de traitement MT qui ordonne alors à son terminal mobile T1 d'adresser à l'équipement de réseau ER, via le réseau mobile R1, un message l'informant que l'association des première et seconde adresses n'est plus valable.

En variante, si le terminal hôte T2' dispose d'un second dispositif D2 muni d'un module de détection de présence MD', ce dernier sait, du fait qu'il observe le module de communication MC', quand le terminal mobile T1 n'est plus dans la zone de couverture du réseau local sans fil R2 (fin de réception des signaux émis par le terminal mobile T1). Il peut alors en informer le module de traitement MT' qui ordonne alors à son terminal hôte T2' d'adresser à l'équipement de réseau ER, via le réseau fixe R3, un message l'informant que l'association des première et seconde adresses n'est plus valable.

Dans un cas comme dans l'autre, on peut envisager que la demande de transmission du message d'information à destination de l'équipement de réseau ER ne soit demandée par le module de traitement MT (ou MT') qu'après expiration d'une temporisation activée par l'information fournie par le module de détection de présence MD (ou MD'). Cela est destiné à éviter de prendre en compte chaque sortie de courte durée de l'utilisateur du terminal mobile T1 hors de la zone de couverture du réseau local sans fil R2, ce qui imposerait à chaque fois une nouvelle mise en oeuvre complète du procédé selon l'invention.

On notera que, lorsque le terminal hôte T2' est le destinataire final d'un appel issu d'un terminal tiers de communication T3, il peut éventuellement, lorsqu'il a été approprié par le terminal mobile T1, déporter des média vers ce dernier, via le réseau PAN R2.

Le premier dispositif D1 et/ou le second dispositif D2, selon l'invention, peu(ven)t être réalisé(s) sous la forme de circuits électroniques, de modules logiciels (ou informatiques), ou d'une combinaison de circuits et de logiciels.

L'invention ne se limite pas aux modes de réalisation de procédé d'établissement de communication, de premier dispositif de contrôle d'établissement de communication, de second dispositif de contrôle d'établissement de communication, de terminal de communication mobile et de terminal de communication fixe décrits ci-avant, seulement à titre d'exemple, mais elle englobe toutes les variantes que pourra envisager l'homme de l'art dans le cadre des revendications ci-après.

## Revendications

1. Procédé d'établissement d'une communication avec un terminal de communication pour un utilisateur d'un terminal de communication mobile (T1) disposant d'une adresse de communication, dite première adresse, et agencé pour se connecter à un réseau de communication mobile (R1) et à un terminal de communication dit hôte (T2 ; T2'), via un réseau local sans fil (R2) ;
**caractérisé en ce qu'**il consiste :
a) à connecter ledit terminal de communication mobile (T1) à un réseau local sans fil (R2), de manière à obtenir une adresse de communication, dite seconde adresse, d'un terminal de communication hôte (T2 ; T2') connecté audit réseau local sans fil (R2) et connecté à un réseau de communication fixe (R3), et situé dans le voisinage dudit utilisateur,
b) à transmettre lesdites première et seconde adresses à un équipement de réseau (ER) apte à associer lesdits terminaux mobile (T1) et hôte (T2 ; T2') pour des prochains événements de communication,
c) en cas de demande d'établissement d'une communication, issue d'un terminal tiers de communication (T3) et désignant ladite première adresse, transformer, dans ledit équipement de réseau (ER), cette demande en une demande d'établissement de communication vers au moins ladite seconde adresse,
d) établir une communication entre le terminal tiers de communication (T3) et le terminal hôte (T2 ; T2').

2. Procédé selon la revendication 1, **caractérisé en ce qu'**en cas de demande d'établissement de communication déclenchée par ledit utilisateur au moyen de son terminal de communication mobile (T1), on établit ladite communication via ledit réseau local sans fil (R2), ledit terminal de communication hôte (v), ledit réseau de communication fixe (R3) et ledit équipement de réseau (ER).

3. Procédé selon la revendication 1, **caractérisé en ce qu'**à chaque nouvelle demande d'établissement de communication déclenchée par ledit utilisateur au moyen de son terminal de communication mobile (T1), ce dernier propose audit utilisateur d'établir ladite communication au moyen dudit terminal de communication hôte (T2 ; T2').

4. Procédé selon l'une des revendications 1 à 3, **caractérisé en ce qu'**au b) ledit terminal de communication mobile (T1) transmet lesdites première et seconde adresses audit équipement de réseau (ER) afin qu'il les associe.

5. Procédé selon l'une des revendications 1 à 4, **caractérisé en ce qu'**au b) ledit terminal de communication hôte (T2 ; T2') transmet lesdites première et seconde adresses audit équipement de réseau (ER) afin qu'il les associe.

6. Procédé selon l'une des revendications 4 et 5, **caractérisé en ce que** ladite transmission d'adresse(s) se fait au moyen d'un message court.

7. Procédé selon l'une des revendications 4 et 5, **caractérisé en ce que** ladite transmission d'adresse(s) se fait en mode de transfert de données.

8. Procédé selon l'une des revendications 1 à 7, **caractérisé en ce que** pour connecter ledit terminal de communication mobile (T1) à un réseau local sans fil (R2) de type personnel, on le connecte automatiquement à ce réseau local sans fil (R2) dès que la présence de ce terminal de communication mobile (T1) est détectée dans la zone de couverture dudit réseau local personnel sans fil (R2).

9. Procédé selon l'une des revendications 1 à 7, **caractérisé en ce** pour connecter ledit terminal de communication mobile (T1) à un réseau local sans fil de type personnel (R2), on propose à son utilisateur de se connecter à ce réseau local personnel sans fil (R2) dès que l'on détecte la présence dudit terminal de communication mobile (T1) dans la zone de couverture de ce réseau local sans fil de type personnel (R2),
et, si l'utilisateur donne son autorisation, on ordonne audit terminal de communication mobile (T1) de se connecter audit réseau local personnel sans fil (R2).

10. Procédé selon l'une des revendications 8 et 9, **caractérisé en ce que** ladite détection est effectuée par ledit terminal de communication hôte (T2 ; T2').

11. Procédé selon l'une des revendications 8 et 9, **caractérisé en ce que** ladite détection est effectuée par ledit terminal de communication mobile (T1).

12. Procédé selon l'une des revendications 1 à 11, **caractérisé en ce qu'**il consiste en outre à informer ledit équipement de réseau (ER) lorsque ledit terminal de communication mobile (T1) ne se trouve plus situé dans la zone de couverture dudit réseau local sans fil (R2), de sorte qu'il cesse d'associer lesdits terminaux mobile (T1) et hôte (T2 ; T2') pour des prochains événements de communication.

13. Procédé selon la revendication 12, **caractérisé en ce que**, ledit équipement de réseau (ER) est informé par ledit terminal de communication mobile (T1) lorsque ledit terminal de communication mobile (T1) ne se trouve plus situé dans la zone de couverture dudit réseau local sans fil (R2).

14. Procédé selon la revendication 12, **caractérisé en ce que** ledit équipement de réseau (ER) est informé par ledit terminal de communication hôte (T2') lorsque ledit terminal de communication mobile (T1) ne se trouve plus situé dans la zone de couverture dudit réseau local sans fil (R2).

15. Procédé selon l'une des revendications 1 à 14, **caractérisé en ce qu'**en présence d'un terminal de communication hôte (T2 ; T2') propre à joindre ledit terminal de communication mobile (T1) via un réseau local sans fil (R2), et en cas de demande d'établissement de communication issue d'un terminal tiers de communication (T3) et désignant ladite première adresse, ledit équipement de réseau (ER) transforme cette demande en une demande d'établissement de communication au moins vers ladite seconde adresse en requérant son transfert vers ledit terminal de communication mobile (T1), en vue de l'établissement de la communication demandée entre ledit terminal de communication mobile (T1) et ledit terminal tiers de communication (T3) via ledit réseau local sans fil (R2), ledit terminal de communication hôte (T2), ledit réseau de communication fixe (R3) et ledit équipement de réseau (ER).

16. Procédé selon l'une des revendications 1 à 15, **caractérisé en ce qu'**en cas de demande d'établissement de communication issue d'un terminal tiers de communication (T3) et désignant ladite première adresse, ledit équipement de réseau (ER) transfère cette demande vers ladite seconde adresse et vers ladite première adresse.

17. Dispositif (D1) de contrôle d'établissement de communication pour un terminal de communication mobile (T1) disposant d'une adresse de communication, dite première adresse, et agencé pour se connecter à un réseau de communication mobile (R1) et à un réseau local sans fil (R2),
**caractérisé en ce qu'**il comprend des moyens de traitement (MT) agencés pour, lorsque ledit terminal de communication mobile (T1) est situé dans la zone de couverture d'un réseau local sans fil (R2), ordonner audit terminal de communication mobile (T1) de :
i) se connecter à ce réseau local sans fil (R2), de manière à obtenir une adresse de communication, dite seconde adresse, qui est l'adresse d'un terminal de communication dit hôte (T2) connecté audit réseau local sans fil (R2) et connecté à un réseau de communication fixe (R3), ce terminal de communication hôte (T2) étant situé dans le voisinage dudit terminal de communication mobile (T1),
ii) transmettre lesdites première et seconde adresses à un équipement de réseau (ER), via ledit réseau de communication mobile (R1), cet équipement de réseau (ER) étant apte à associer lesdits terminaux mobile (T1) et hôte (T2 ; T2') pour des prochains événements de communication.

18. Dispositif selon la revendication 17, **caractérisé en ce que** ces moyens de traitement (MT) sont agencés en outre pour, en cas de demande d'établissement de communication déclenchée par ledit utilisateur au moyen de son terminal de communication mobile (T1), établir une communication via ledit réseau local sans fil (R2), ledit terminal de communication hôte (T2 ; T2'), ledit réseau de communication fixe (R3), et ledit équipement de réseau (ER).

19. Dispositif selon la revendication 17, **caractérisé en ce** ces moyens de traitement (MT) sont agencés en outre pour, en cas de demande d'établissement de communication déclenchée par ledit utilisateur au moyen de son terminal de communication mobile (T1), proposer audit utilisateur d'établir ladite communication au moyen dudit terminal de communication hôte (T2 ; T2').

20. Dispositif selon l'une des revendications 17 à 19, **caractérisé en ce que** lesdits moyens de traitement (MT) sont agencés en outre pour ordonner audit terminal de communication mobile (T1) de transmettre lesdites première et seconde adresses audit équipement de réseau (ER) au moyen d'un message court demandant à cet équipement de réseau (ER) d'associer ces deux adresses.

21. Dispositif selon l'une des revendications 17 à 19, **caractérisé en ce que** lesdits moyens de traitement (MT) sont agencés en outre pour ordonner audit terminal de communication mobile (T1) de transmettre lesdites première et seconde adresses audit équipement de réseau (ER) et demander à cet équipement de réseau (ER) d'associer ces deux adresses, par un message en mode transfert de données.

22. Dispositif selon l'une des revendications 17 à 21, **caractérisé en ce qu'**il comprend en outre des moyens de détection de présence (MD) agencés pour détecter la présence dudit terminal de communication mobile (T1) dans la zone de couverture d'un réseau local sans fil de type personnel (R2), et **en ce que** lesdits moyens de traitement (MT) sont agencés pour, en cas de détection de la présence du terminal de communication mobile (T1) dans la zone de couverture d'un réseau local personnel sans fil (R2), ordonner audit terminal de communication mobile (T1) de se connecter audit réseau local personnel sans fil (R2).

23. Dispositif selon l'une des revendications 17 à 22, **caractérisé en ce qu'**il comprend des moyens de détection de présence agencés pour détecter la présence dudit terminal de communication mobile (T1) dans la zone de couverture d'un réseau local sans fil de type personnel, et en informer lesdits moyens de traitement (MT) ;
et ce que lesdits moyens de traitement (MT) sont agencés pour, dans ce cas, proposer à son utilisateur de se connecter à ce réseau local personnel sans fil (R2), et, si l'utilisateur donne son autorisation, ordonner audit terminal de communication mobile (T1) de se connecter audit réseau local personnel sans fil (R2).

24. Dispositif selon l'une des revendications 17 à 23, **caractérisé en ce que** lesdits moyens de traitement (MT) sont agencés pour, en cas de détection de la sortie dudit terminal de communication mobile (T1) hors de la zone de couverture dudit réseau local sans fil (R2), ordonner audit terminal de communication mobile (T1) d'en informer ledit équipement de réseau (ER) de sorte qu'il cesse d'associer lesdits terminaux mobile (T1) et hôte (T2).

25. Terminal de communication mobile (T1), disposant d'une première adresse de communication et agencé pour se connecter à un réseau de communication mobile (R1) et à un réseau local sans fil (R2), **caractérisé en ce qu'**il comprend un dispositif de contrôle d'établissement de communication (D1) selon l'une des revendications 17 à 24.

26. Dispositif (D2) de contrôle d'établissement de communication, pour un terminal de communication hôte (T2') disposant d'une adresse de communication, dite seconde adresse, et constituant un point d'accès à un réseau local sans fil (R2), ce terminal hôte (T2') étant connecté à un réseau de communication fixe (R3) ;
**caractérisé en ce qu'**il comprend des moyens de traitement (MT') agencés pour, en présence d'un terminal de communication mobile (T1) dans la zone de couverture dudit réseau local sans fil (R2), ce terminal de communication mobile (T1) disposant d'une adresse de communication, dite première adresse, et étant agencé pour se connecter à un réseau de communication mobile (R1) et à un réseau local sans fil (R2),
i) demander audit terminal de communication mobile (T1) de se connecter à ce réseau local sans fil (R2), de manière à obtenir ladite première adresse et une autorisation de l'utilisateur dudit terminal de communication mobile (T1),
ii) transmettre lesdites première et seconde adresses à un équipement de réseau (ER), via ledit réseau de communication fixe (R3), et lui demander d'associer lesdits terminaux mobile (T1) et hôte (T2) pour des prochains événements de communication.

27. Dispositif selon la revendication 26, **caractérisé en ce qu'**en cas de réception d'une demande d'établissement de communication en provenance dudit terminal de communication mobile (T1), lesdits moyens de traitement (MT') sont agencés pour organiser l'établissement de la communication via ledit réseau local sans fil (R2), ledit terminal de communication hôte (T2'), ledit réseau de communication fixe (R3) et ledit équipement de réseau (ER).

28. Dispositif selon la revendication 26, **caractérisé en ce qu'**en cas de réception d'une demande d'établissement de communication en provenance dudit terminal de communication mobile (T1), lesdits moyens de traitement (MT') sont agencés pour ordonner audit terminal de communication hôte (T2') de transmettre audit terminal de communication mobile (T1) un message proposant à l'utilisateur d'établir cette communication à partir dudit terminal de communication hôte (T2').

29. Dispositif selon l'une des revendications 26 à 28, **caractérisé en ce que** lesdits moyens de traitement (MT') sont agencés pour ordonner audit terminal de communication hôte (T2') de transmettre lesdites première et seconde adresses audit équipement de réseau (ER) au moyen d'un message court, afin qu'il les associe.

30. Dispositif selon l'une des revendications 26 à 28, **caractérisé en ce que** lesdits moyens de traitement (MT') sont agencés pour ordonner audit terminal de communication hôte (T2') de transmettre lesdites première et seconde adresses audit équipement de réseau (ER) selon un mode transfert de données, afin qu'il les associe.

31. Dispositif selon l'une des revendications 26 à 30, **caractérisé en ce qu'**il comprend en outre des moyens de détection de présence (MD') agencés pour détecter la présence dudit terminal de communication mobile (T1) dans la zone de couverture dudit réseau local sans fil de type personnel (R2),
et **en ce que** lesdits moyens de traitement (MT') sont agencés pour, en cas de détection de la présence du terminal de communication mobile (T1) dans la zone de couverture dudit réseau local personnel sans fil (R2), ordonner audit terminal de communication hôte (T2') de transmettre audit terminal de communication mobile (T1) un message lui proposant de se connecter audit réseau local personnel sans fil (R2) pour lui communiquer sa première adresse.

32. Dispositif selon l'une des revendications 26 à 31, **caractérisé en ce que** lesdits moyens de traitement (MT') sont agencés pour qu'en cas de détection de sortie dudit terminal de communication mobile (T1) hors de la zone de couverture dudit réseau local sans fil (R2), ordonner audit terminal de communication hôte (T2') d'en informer ledit équipement de réseau (ER) de sorte qu'il cesse d'associer les lesdits terminaux mobile (T1) et hôte (T2 ; T2').

33. Terminal de communication, dit hôte (T2'), disposant d'une adresse, appelée seconde adresse de communication, et propre à constituer un point d'accès à un réseau local sans fil (R2) et à être connecté à un réseau de communication fixe (R3), **caractérisé en ce qu'**il comprend un dispositif de contrôle d'établissement de communication (D2) selon l'une des revendications 26 à 32.
